# EUROPÄISCHE PATENTSCHRIFT

(11) **EP 1 183 211 B1**
(45) Veröffentlichungstag und Bekanntmachung des Hinweises auf die Patenterteilung: **08.01.2003**
(21) Anmeldenummer: 00929218.6
(22) Anmeldetag: 15.03.2000
(51) Int. Cl.: C01B 31/10, B01J 20/20

(54) **VERFAHREN ZUR HERSTELLUNG VON GEFORMTEN HOCHLEISTUNGSADSORBENZIEN**
METHOD FOR PRODUCING SHAPED HIGH-PERFORMANCE ADSORBING MATERIALS
PROCEDE DE PRODUCTION D'ADSORBANTS MOULES HAUTEMENT PERFORMANTS

(30) Priorität: 18.03.1999 DE 19912153
(43) Veröffentlichungstag der Anmeldung: 06.03.2002
(73) Patentinhaber: Carbotex Produktions- und Veredelungsbetriebe GmbH, 06803 Bitterfeld-Greppin (DE)
(72) Erfinder: SPIEKER, Hubertus, D-33098 Paderborn (DE); GIEBELHAUSEN, Jann-Michael, D-14712 Rathenow (DE)
(74) Vertreter: Gagel, Roland, Dr.
(86) Internationale Anmeldenummer: DE0000823
(87) Internationale Veröffentlichungsnummer: WO00055092

(56) Entgegenhaltungen:
- DE-A- 2 024 210
- DE-A- 4 304 026
- DE-A- 19 600 237
- FR-A- 2 423 443
- GB-A- 1 001 161
- GB-A- 2 280 898

## Beschreibung

Die Erfindung betrifft ein Verfahren zur Herstellung von regelmäßig geformten Hochleistungsadsorbenzien durch Wassserdampfaktivierung in einem diskontinuierlich arbeitenden Drehrohrofen. Die hergestellten Hochleistungsadsorbenzien können sehr vielseitig eingesetzt werden. Sie kommen insbesondere zur Lufttrennung, adsorptiven Kühlung und als adsorptive Komponente in textilen und synthetischen Flächengebilden zur Anwendung.

Es ist bekannt, daß bereits vorgeformte Ausgangsmaterialien zur Herstellung von Adsorbenzien verwendet werden. Weiterhin ist bekannt, aus kohlenstoffhaltigen Materialien und einem Bindemittel nach verschiedenen Verfahren geformte Ausgangsprodukte herzustellen, , die anschließend durch Karbonisierung und Aktivierung zu Adsorbenzien verarbeitet werden.
Im WP 27 022 wird die Herstellung von adsorptionsfähiger Kohle durch Verkokung von Ionenaustauscherharzen beschrieben.
Nach dem WP 63 768 ist ein Verfahren zur Herstellung von geformter Aktivkohle für die Ölsorption aus Wasser bekannt, wobei sulfonierte Styrol-Divinylbenzol-Kationenaustauscherharze bei Temperaturen von 250 °C bis 1000 °C thermisch behandelt werden, so daß eine Kohle mit einem Kohlenstoffgehalt von 80 - 90 % entsteht, die anschließend mit Wasserdampf aktiviert wird.
Beide Verfahren gehen von vorgeformten Ausgangsmaterialien aus. Die hergestellten Adsorbenzien besitzen eine zu geringe Adsorptionsleistung. Die für Hochleistungsadsorbenzien erforderliche Porenstruktur kann sich verfahrensbedingt nicht herausbilden.
Das US-PS 40 40 990 beschreibt partiell pyrolysierte Partikel mit makroporöser Porenverteilung von 50 bis 100 000 Angström und hoher Abriebhärte für den Einsatz zur Adsorption, Molekulartrennung und Katalyse. Ausgangsprodukte sind vorgeformte, makroporöse synthetische Polymere, die im Inertgasstrom partiell pyrolysiert werden. Diese partiell pyrolysierten Partikel erfüllen aufgrund der unzureichend ausgebildeten Porenstrukturverteilung und des zu geringen Gesamtporenvolumens nicht die Qualitätskriterien, die an Hochleistungsadsorbenzien gestellt werden. Durch Pyrolyse ist eine gezielte, in Abhängigkeit vom Einsatzzweck definierte Verteilung der Mikro-, Mesound Makroporen nicht realisierbar.
Aus dem US-PS 49 57 897 ist ein Verfahren zur Herstellung von karbonisierten Adsorbenzien aus vorgeformten, sulfonierten, makroporösen, aromatischen Polymeren bekannt. Durch Pyrolyse bei über 300 °C bis über 1200 °C wird in einer Inertgasatmosphäre eine multimodale Porengrößenverteilung mit einem Mikroporenvolumen von mindestens 0,02 cm³/g erzielt. Der Prozeß der Pyrolyse kann auch in Anwesenheit einer Aktivierungsatmosphäre bestehend aus Dampf oder Ammoniak bei Temperaturen von 800 °C - 1000 °C ablaufen. Weiterhin ist eine Vorbehandlung der karbonisierten Adsorbenzien durch Sulfonierung, Chlormethylierung, Amine oder Bromwasserstoff vorgesehen. Auch dieses Verfahren ist nicht geeignet, Hochleistungsadsorbenzien mit einer BET-Oberfläche von mindestens 1400 m²/g und einer definierten Porenstruktur herzustellen. Die Vorbehandlung mit speziellen organischen und anorganischen Produkten erhöht den apparativen Aufwand, aber nicht die Qualitäts- und Quantitätsausbeute.
Inhalt der DE 19 60 02 37 und DE 19 62 50 69 ist die Herstellung von körniger Aktivkohle aus einer kugelförmigen Styrol/Divinylbenzol - Copolymermatrix. Die Styrol-Divinyl - Copolymermatrix wird mit 5 bis 50 Gewichtsprozent Schwefelsäure, 39 - 83 Gewichtsprozent konzentrierter Schwefelsäure und/oder Oleum bei mindestens 750 °C verschwelt und anschließend bei einer Temperatur von 800 bis 900 °C unter Zugabe von Wasserdampf, Luftsauerstoff oder Kohlendioxid im Drehrohrofen oder in der Wirbelschicht aktiviert. Der Einsatz von Schwefelsäure und/oder Oleum bei der Verschwelung führt zu einer erhöhten Umweltbelastung, verbunden mit einem größeren apparativen Aufwand. Die geringe Gesamtausbeute von 15 % verschlechtert zusammen mit den zusätzlichen Kosten für Schwefelsäure und/oder Oleum das ökonomische Ergebnis. Die für Hochleistungsadsorbenzien vorgegebenen Qualitätsziele werden nicht erreicht.
Ein Verfahren zur Herstellung von kugelförmiger Aktivkohle aus kohlenstoffhaltigen, nachwachsenden Rohstoffen, die mit Lithiumsalzen getränkt und mit Fettkohle, Cellulose und einem selbsthärtenden Kunstharzbindemittel gemischt, getrocknet, gehärtet, karbonisiert und aktiviert werden, ist aus der DE 44 16 576 und DE 19 53 83 73 bekannt.
Bekannt ist auch die Herstellung von Mikrokügelchen aus vermahlener Aktivkohle, die in wasserunlösliches Kunstharz dispergiert und anschließend gepreßt, gepudert, granuliert und getrocknet wird, nach DE 35 10 209.
Diese Verfahren beinhalten die Herstellung des kugelförmigen Ausgangsmateriales. Die hergestellten kugelförmigen Aktivkohlen weisen keine ausreichende Abriebfertigkeit, Härte und Adsorptionsleistung aus. Die Korngröße ist nicht exakt definiert und die geometrische Kugelbildung nicht gleichmäßig. Verfahrensbedingt ist der apparative Aufwand dieser Technologie hoch.

Aufgabe der Erfindung ist es, ohne großen apparativen Aufwand nach einem wirtschaftlichen Verfahren aus kohlenstoffhaltigen Materialien unterschiedlicher Provenienz geformte Hochleistungsadsorbenzien für den Einsatz zur Lufttrennung, adsorptiven Kühlung und als adsorptive Komponente in textilen und synthetischen Flächengebilden herzustellen. Die Hochleistungsadsorbenzien sollen eine hohe Adsorptionskapazität, eine sehr gute Beständigkeit gegenüber mechanischer und hydraulischer Beanspruchung und eine aus strömungstechnischen Gründen gleichmäßige Kugelform besitzen. Sie müssen im Interesse einer ökonomischen industriellen Anwendung mehrfach regenerierbar sein.

Die Hochleistungsadsorbenzien werden aus sphärisch vorgeformten Materialien, die mindestens 12 % fixen Kohlenstoff,, bezogen auf Trockensubstanz, enthalten wie Polymerharze, Acetylenkoks und Perlcellulose durch Wasserdampfaktivierung in einen indirekt beheizten Drehrohrofen im diskontinuierlichen Maßstab hergestellt.
Erfindungsgemäß werden die sphärisch vorgeformten Materialien in einem Drehrohrtrockner bei 4 maliger Produktumwälzung je Ofenumdrehung und bei einem Raum/Zeit-Koeffizienten von 1 bis 2,5 m³/h mit Heißgas auf eine Restfeuchte von mindestens 25 % schonend vorgetrocknet, anschließend in einem diskontinuierlich arbeitenden indirekt beheizten Drehrohrofen bei 6 maliger Produktumwälzung je Ofenumdrehung, bei ein Raum/Zeit-Koeffizienten von 5 bis 10 m³/h und einem Unterdruck auf der Rauchgasseite von 1,5 bis 3,0 mm Wassersäule im Inertgasstrom auf einen fixen Kohlenstoffgehalt von 80 bis 97 % karbonisiert und in einem indirekt beheizten Drehrohrofen bei 8 maliger Produktumwälzung je Ofenumdrehung, bei einem Raum/Zeit-Koeffizienten von 1 bis 5 m³/h und bei einem Unterdruck auf der Rauchgasseite von 0,05 bis 1,0 mm Wassersäule im Inertgasstrom unter Zugabe von 0,2 bis 0,3 kg/h kg Wasserdampf bei einem über den gesamten beheizten Ofenbereich konstanten Produkttemperaturprofil von 910 °C bis 920 °C diskontinuielich aktiviert.
Bei der Trocknung im Drehrohrofen wird die Produkttemperatur stufenweise um 8 bis 10 °C/min. auf eine Endtemperatur von 200 bis 300 °C erhöht und die Endtemperatur 30 bis 60 Minuten konstant gehalten.
Die Karbonisierung wird in Temperaturintervallen mit einer Aufheizgeschwindigkeit von 6 bis 9 °C/min. im Temperaturbereich von 30 bis 300 °C, von 2 bis 4 °C/min. im Temperaturbereich von 300 bis 500 °C und von 1 bis 30 °C/min. im Temperaturbereich von 500 bis 800 °C Endtemperatur durchgeführt.
Bei der Aktivierung wird die erforderliche Wasserdampfmenge gezielt über Düsen in den Aktivierungsofen dosiert, wobei, bezogen auf die beheizte Ofenlänge vom Produkteintrag gerechnet, 15 % der Wasserdampfmenge im Bereich von 16 bis 18 %, 20 % der Wasserdampfmenge im Bereich von 42 bis 44 %, 30 % der Wasserdampfmenge im Bereich von 53 bis 55, 20 % der Wasserdampfinenge im Bereich von 66 bis 68 % und 15 % der Wasserdampfmenge im Ofenbereich von 82 bis 84 % zugegeben werden.

Die Erfindung ermöglicht die Herstellung von geformten Hochleistungsadsorbenzien mit sehr hoher Adsorptionskapazität, charakterisiert durch die Jodadsorption, von mindestens 1400 mg/g und sehr guten Fertigkeit gegenüber mechanischer und hydraulischer Beanspruchung aus sphärisch vorgeformten Rohstoffen unterschiedlicher Provenienz. Nach dem erfindungsgemäßen Verfahren hergestellte geformte Hochleistungsadsorbenzien besitzen ein breites Porenspektrum mit gleichmäßiger Verteilung von Mikro-, Meso- und Makroporen und sind damit besonders für den Einsatz zur Lufttrennung, adsorptiven Kühlung und als adsorptive Komponente in textilen und synthetischen Flächengebilden geeignet.

Von besonderem Vorteil ist, daß durch die schonende Trocknung, Karbonisierung und Aktivierung ein optimales Qualitäts/Ausbeute - Verhältnis erzielt wird.
Erfindungsgemäß können die geformten Hochleistungsadsorbenzien mit geringem apparativen Aufwand und damit wirtschaftlich hergestellt werden. Die Hochleistungsadsorbenzien sind aufgrund ihrer hohen Härte und Abriebfertigkeit mehrfach regenerierbar.

Die Erfindung wird anhand folgender Ausführungsbeispiele näher erläutert:

### Beispiel 1

Als Ausgangsprodukt für die erfindungsgemäße Herstellung von geformten Hochleistungsadsorbenzien wird ein Polymerharz mit folgender Qualitätsspezifikation eingesetzt:

| | | |
|---|---|---|
| Wassergehalt | 48,5 % | |
| flüchtige Bestandteile | 59,0 % | |
| Aschegehalt | 3,6 % | |
| fixer Kohlenstoff | 37,4 % | |
| Schwefelgehalt | 15,2 % | |
| Körnung | > 1,25 mm | 0,1 % |
| | 1,25 - 1,00 mm | 4,2 % |
| | 1.00-0,80 mm | 40,0 % |
| | 0,80 - 0,50 mm | 53,6 % |
| | < 0,50 mm | 2,1 % |

Der sphärisch vorgeformte Rohstoff wird in einem Drehrohrtrockner, der über Hubschaufeln verfügt, die eine 4 malige Produktumwälzung je Ofenumdrehung gewährleisten, bei einem Raum/Zeit-Koeffizienten von 1,9 m³/h mit Heißgas auf eine Restfeuchte von 21,5 % diskontinuierlich und schonend vorgetrocknet. Beim Trocknungsprozeß wird die Produkttemperatur stufenweise um 8 °C/min. bis zur Endtemperatur von 300 °C erhöht und die Endtemperatur 45 Minuten konstant gehalten.
Anschließend wird das vorgetrocknete Produkt in einem indirekt beheizten Drehrohrofen bei 6 maliger Produktumwälzung je Ofenumdrehung und bei einem Raum/Zeit - Koeffizienten von 7 m³/h im Inertgasstrom auf einen fixen Kohlenstoffgehalt von 88,3 % karbonisiert. Die Karbonisierung wird in Temperaturintervallen mit einer Aufheizgeschwindigkeit von 9 °C/min. im Temperaturbereich 3 von 30 °C bis 300 °C, von 4 °C/min. im Temperaturbereich 300 °C bis 500 °C und von 3 °C/min. im Temperaturbereich von 500 °C bis 800 °C Endtemperatur unter Einhaltung eines Unterdruckes auf der Rauchgasseite von 1,5 mm Wassersäule diskontinuierlich durchgeführt.
Für die sich anschließend Aktivierung wird ebenfalls ein indirekt beheizter Drehrohrofen mt 8 maliger Produktumwälzung je Ofenumdrehung und einem Raum/Zeit - Koeffizienten von 2,12 m³/h eingesetzt. Die Aktivierung erfolgt unter Zugabe von 0,25 kg/h kg Wasserdampf bei einem über die gesamte beheizbare Ofenlänge konstantem Produkttemperaturprofil von 920 °C im Inertgasstrom diskontinuierlich bei einem Unterdruck auf der Rauchgasseite von 0,1 mm Wassersäule.
Die erforderliche Wasserdampfmenge wird gezielt über Düsen in den Aktivierungsofen wie folgt dosiert:
- 15 % der Wasserdampfinenge im Bereich 17 % der Ofenlänge,
- 20 % der Wasserdampfinenge im Bereich 43 % der Ofenlänge,
- 30 % der Wasserdampfinenge im Bereich 54 % der Ofenlänge,
- 20 % der Wasserdampfmenge im Bereich 67 % der Ofenlänge,
- 15 % der Wasserdampfmenge im Bereich 83 % der Ofenlänge, jeweils bezogen auf die beheizte Ofenlänge vom Produkteintrag gerechnet.
Die Hochleistungsadsorbenzien werden abgekühlt und die Nennkornfraktion 0,8 bis 0,315 mm abgesiebt.
Die erfindungsgemäß aus Polymerharz hergestellten geformten Hochleistungsadsorbenzien weisen folgende Qualitätsparameter auf:

| | | |
|---|---|---|
| Rüttelgewicht | 545 g/l | |
| Asche | 0,8 % | |
| Jodzahl | 1565 mg/g | |
| Methylenblautiter | 38,3 ml | |
| BET-Oberfläche | 1610 m²/g | |
| Abriebfertigkeit | 100 % | |
| Stoßhärte | 95 % | |
| Ball-Pan-Härte | 100 % | |
| hydraulische Fertigkeit | 100 % | |
| Regenerierverlust | 1 % | |
| Körnung | > 0,80 mm | 0,2 % |
| | 0,80 - 0,50 mm | 8,6 % |
| | 0,50 - 0,40 mm | 76,4 % |
| | 0,40 - 0,315 mm | 14,7 % |
| | < 0,315 mm | 0,1% |
| Qualitätsausbeute | 28 % | |

Die geformten Hochleistungsadsorbenzien zeichnen sich durch eine sehr hohe Adsorptionskapazität und überragende Fertigkeit gegenüber mechanischer und hydraulischer Beanspruchung aus. Sie sind mehrfach regenerierbar und verfügen über ein breites Porenspektrum mit einer gleichmäßigen Verteilung von Mikro-, Meso- und Makroporen. Die erfindungsgemäß hergestellten geformten Hochleistungsadsorbenzien sind besonders für den Einsatz zur Lufttrennung, adsorptiven Kühlung und als adsorptive Komponente in textilen und synthetischen Flächengebilden geeignet.

### Beispiel 2

Als Ausgangsmaterial für die erfindungsgemäße Herstellung von geformten Hochleistungsadsorbenzien dient sphärisch vorgeformter Acetylenkoks mit folgender Qualitätsspezifikation:

| | | |
|---|---|---|
| Wassergehalt | 15,4 % | |
| flüchtige Bestandteile | 11,8 % (Wf) | |
| fixer Kohlenstoff | 88,05 % (Wf) | |
| Asche | 0,15 % (Wf) | |
| Körnung | > 1,00 mm | 20,6 % |
| | 1,00 - 0,80 mm | 11,8% |
| | 0,80 - 0,50 mm | 16,9 % |
| | 0,50 - 0,40 mm | 27,1% |
| | 0,40 - 0,20 mm | 23,4 % |
| | < 0,20 mm | 0,2 % |

Der Acetylenkoks wird in einem Drehrohrtrockner bei einem Raum/Zeit - Koeffizienten von 2,5 m³/h mit Heißgas auf eine Restfeuchte von 4,0 % bei einer 4 maligen Produktumwälzung je Ofenumdrehung mittels eingebauter Hubschaufeln diskontinuierlich vorgetrocknet. Die Trocknung erfolgt bei einer stufenweise Erhöhung der Produkttemperatur um 9 °C/min. bis zu einer Endtemperatur von 200 °C und anschließender Konstantfahrweise von 45 Minuten. Das vorgetrocknete Produkt wird in einen indirekt beheizten Drehrohrofen gefördert, der über Hubschaufeln verfügt, die eine 6 malige Produktumwälzung je Ofenumdrehung ermöglichen. Die Karbonisierung erfolgt bei einem Raum/Zeit - Koeffizienten von 7 m³/h diskontinuierlich im Inertgasstrom bis zu einem fixen Kohlenstoffgehalt von 95,8 % wobei eine Aufheizgeschwindigkeit von 9 °C/min. im Temperaturbereich von 30 bis 300 °C, von 4 °C/min. im Temperaturbereich von 300 bis 500 °C und von 3 °C/min. im Temperaturbereich von 500 bis 800 °C realisiert wird. Auf der Rauchgasseite des Drehrohrofens liegt ein Unterdruck von 2,5 mm Wassersäule an.
Die sich anschließende diskontinuierliche Aktivierung erfolgt in einem indirekt beheizten Drehrohrofen bei 8 maliger Produktumwälzung je Ofenumdrehung, einem Raum/Zeit - Koeffizienten von 2 m³/h und unter Zugabe einer Wasserdampfmenge von 0,3 kg/h kg im Inertgasstrom. Dabei wird das Produkttemperaturprofil über die gesamte beheizte Ofenlänge bei 910 °C konstant gehalten und ein Unterdruck auf der Rauchgasseite von 1,0 mm Wassersäule eingestellt.
Die Wassermenge von 0,3 kg/h kg wird gezielt mittels Düsen in den Aktivierungsofen wie folgt eingespeist:
- 15 % der Wassermenge im Bereich 16 % der Ofenlänge,
- 20 % der Wassermenge im Bereich 42 % der Ofenlänge,
- 30 % der Wassermenge im Bereich 53 % der Ofenlänge,
- 20 % der Wassermenge im Bereich 66 % der Ofenlänge,
- 15 % der Wassermenge im Bereich 82 % der Ofenlänge, jeweils bezogen auf die beheizte Ofenlänge vom Produkteintrag gerechnet.
Nach dem Austrag wird das Endprodukt abgekühlt und bei 0,8 und 0,315 mm abgesiebt.

Die erfindungsgemäß aus Acetylenkoks hergestellten geformten Hochleistungsadsorbenzien sind durch folgende Qualitätswerte charakterisiert:

| | | |
|---|---|---|
| Rüttelgewicht | 465 g/l | |
| Asche | 1,4 % | |
| Jodzahl | 1435 mg/g | |
| Methylenblautiter | 33,1 ml | |
| BET-Oberfläche | 1480 m²/g | |
| Abriebfertigkeit | 100 % | |
| Stoßhärte | 97 % | |
| Ball-Pan-Härte | 100 % | |
| hydraulische Fertigkeit | 100 % | |
| Regenerierverlust | 2 % | |
| Körnung | > 0,80 mm | 1,8 % |
| | 0,80 - 0,50 mm | 15,6 % |
| | 0,50 - 0,40 mm | 64,7 % |
| | 0,40 - 0,315 mm | 17,8 % |
| | < 0,315 mm | 0,1% |
| Qualitätsausbeute | 31,5 % | |

Die geformten Hochleistungsadsorbenzien besitzen ein sehr gutes Adsorptions- und Desorptionsvermögen. Die Beständigkeit der Hochleistungsadsorbenzien gegenüber jeder Beanspruchung und die Fähigkeit zur Regenerierung heben die besondere Eignung für die Lufttrennung und adsorptiven Kühlung hervor.

### Beispiel 3

Für die erfindungsgemäße Herstellung von geformten Hochleistungsadsorbenzien wird Perlcellulose, die bereits sphärisch vorgeformt ist, mit folgender Spezifikation verwendet:

| | | |
|---|---|---|
| Wassergehalt | 68,5 % | |
| flüchtige Bestandteile | 82,8 % (Wf) | |
| fixer Kohlenstoff | 14,0 % (Wf) | |
| Asche | 3,2 % (Wf) | |
| Körnung | > 1,00 mm | 1,9% |
| | 1,00 - 0,80 mm | 9,2% |
| | 0,80 - 0,50 mm | 88,6 % |
| | < 0,50 mm | 0,3 % |

Die Perlcelullose wird in einem Drehrohrtrockner mit Heißgas bei einem Raum/Zeit - Koeffizienten von 1,7 m³/h und 4 maliger Produktumwälzung je Ofenumdrehung diskontinuierlich und schonend auf eine Restfeuchte von 22,3 % vorgetrocknet. Beim Trocknungsprozeß wird die Produkttemperatur schrittweise um 10 °C/min. auf eine Endtemperatur von 300 °C erhöht, und den Prozeß bei konstanter Temperatur von 300 °C 60 Minuten weitergeführt.
Die Karbonisierung des vorgetrockneten Produktes erfolgt in einem indirekt beheizten Drehrohrofen bei einem Raum/Zeit - Koeffizienten von 6,2 und bei 6 maliger Produktumwälzung je Ofenumdrehung mit Inertgas im diskontinuierlichen Maßstab. Die Aufheizgeschwindigkeit bei der Karbonisierung wird so gesteuert, daß sich die Produkttemperatur im Temperaturbereich von 30 bis 300 °C um 7 °C/min., im Temperaturbereich von 300 bis 500 °C um 3 °C/min. und im Temperaturbereich von 500 bis 800 °C um 2 °C/min. erhöht, wobei ein Unterdruck auf der Rauchgasseite von 2,0 mm Wassersäule anliegt. Dadurch wird ein Kohlenstoffgehalt im Karbonisat von 85,2 % erhalten. Die Aktivierung des Karbonisates wird anschließend in einem indirekt beheizten Drehrohrofen bei 8 maliger Produktumwälzung je Ofenumdrehung und bei einem Raum/Zeit - Koeffizienten von 3,0 m³/h unter Zugabe von 0,2 kg/h kg Wasserdampf im Inertgasstrom diskontinuierlich durchgeführt. Der Unterdruck auf der Rauchgasseite beträgt 0,5 mm Wassersäule und das über die gesamte beheizte Ofenlänge konstant gehaltene Produkttemperaturprofil 915 °C.
Die Wasserdampfdosierung für den Aktivierungsprozeß wird wie folgt durchgeführt:
- 15 % der Wasserdampfmenge im Bereich 18 % der Ofenlänge,
- 20 % der Wasserdampfinenge im Bereich 44 % der Ofenlänge,
- 30 % der Wasserdampfmenge im Bereich 54 % der Ofenlänge,
- 20 % der Wasserdampfmenge im Bereich 68 % der Ofenlänge,
- 15 % der Wasserdampfmenge im Bereich 84 % der Ofenlänge, bezogen auf die beheizte Ofenlänge und vom Produkteintrag gerechnet.
Nach der Aktivierung werden die Hochleistungsadsorbenzien abgekühlt und die Nennkornfraktion 0,8 bis 0,315 mm abgesiebt.
Die erfindungsgemäß aus Perlcellulose hergestellten geformten Hochleistungsadsorbenzien zeichnen sich durch folgende Qualitätsparameter aus:

| | | |
|---|---|---|
| Rüttelgewicht | 425 g/l | |
| Asche | 3,6 % | |
| Jodzahl | 1530 mg/g | |
| Methylenblautiter | 37,2 ml | |
| BET-Oberfläche | 1586 m²/g | |
| Abriebfertigkeit | 96 % | |
| Stoßhärte | 90 % | |
| Ball-Pan-Härte | 100 % | |
| hydraulische Fertigkeit | 100 % | |
| Regenerierverlust | 4 % | |
| Körnung | > 0,80 mm | 0,1% |
| | 0,80 - 0,50 mm | 9,7 % |
| | 0,50 - 0,40 mm | 70,6 % |
| | 0,40 - 0,315 mm | 19,4 % |
| | < 0,315 mm | 0,2 % |
| Qualitätsausbeute | 25,1 % | |

Die geformten Hochleistungsadsorbenzien besitzen hervorragende Adsorptions- und Desorptionsei genschaften und eine sehr gute mechanische und hydraulische Beständigkeit. Die Hochleistungsad sorbenzien sind besonders als adsorptive Komponente für textile und synthetische Flächengebilde geeignet.

## Patentansprüche

1. Verfahren zur Herstellung von geformten Hochleistungsadsorbenzien aus sphärisch vorgeformten Materialien, deren fixer Kohlenstoffgehalt, bezogen auf Trockensubstanz, mindestens 12 % beträgt, mittels Wasserdampfaktivierung unter Inertgas in einem indirekt beheizten Drehrohrofen, **dadurch gekennzeichnet, daß** die sphärisch vorgeformten Materialien in einem Drehrohrtrockner bei 4 maliger Produktumwälzung je Ofenumdrehung und bei einem Raum/Zeit - Koeffizienten von 1 bis 2,5 m³/h mit Heißgas bis auf eine Restfeuchte von 25 % schonend vorgetrocknet werden, die vorgetrockneten Formlinge bei 6 maliger Produktumwälzung je Ofenumdrehung und bei einem Raum/Zeit - Koeffizienten von 5 bis 10 m³/h sowie bei einem Unterdruck auf der Rauchgasseite von 1,5 - 3,0 mm Wassersäule im Inertgasstrom in einem indirekt beheizten Drehrohrofen auf einen fixen Kohlenstoffgehalt von 80 bis 97 % im diskontinuierlichen karbonisiert werden und anschließend die karbonisierten Formlinge bei 8 maliger Produktumwälzung je Ofenumdrehung und bei einem Raum/Zeit - Koeffizienten von 1 bis 5 m³/h sowie bei einem Unterdruck auf der Rauchgasseite von 0,05 bis 1,0 mm Wassersäule unter Zugabe von 0,2 bis 0,3 kg/h kg Wasserdampf im Inertgasstrom in einem indirekt beheizten Drehrohrofen diskontinuierlich aktiviert werden.

2. Verfahren nach Anspruch 1, daurch **gekennzeichnet**, daß beim Trocknungsprozeß die Produkttemperatur stufenweise um 8 bis 10 °C/min. auf eine Endtemperatur von 200 bis 300 °C erhöht und die Endtemperatur 30 bis 60 Minuten konstant gehalten wird.

3. Verfahren nach Anspruch 1, **dadurch gekennzeichnet, daß** die Karbonisierung in Temperaturintervallen mit einer Aufheizgeschwindigkeit von 6 bis 9 °C/min. im Temperaturbereich von 30 bis 300 °C, von 2 bis 4 °C/min. im Temperaturbereich von 300 bis 500 °C und von 1 bis 3 °C/min. im Temperaturbereich von 500 bis 800 °C Endtemperatur erfolgt.

4. Verfahren nach Anspruch 1, **dadurch gekennzeichnet, daß** die Wasserdampfmenge gezielt über Düsen in den Aktivierungsofen dosiert wird, wobei 15 % der Wasserdampfmenge im Bereich von 16 bis 18 % der Ofenlänge, 20 % der Wasserdampfmenge im Bereich von 42 bis 44 % der Ofenlänge, 30 % der Wasserdampfmenge im Bereich von 53 bis 55 % der Ofenlänge, 20 % der Wasserdampfmenge im Bereich von 66 bis 68 % der Ofenlänge und 15 % im Bereich von 82 bis 84 % der Ofenlänge, jeweils bezogen auf die beheizte Ofenlänge vom Produkteintrag gerechnet, zugegeben werden.

5. Verfahren nach Anspruch 1 und 4, **dadurch gekennzeichnet, daß** bei einem Produkttemperaturprofil über die gesamte beheizte Ofenlänge von 910 °C bis 920 °C aktiviert wird.

## Claims

1. Process for the production of shaped high-performance adsorbents from spherically pre-formed materials whose fixed carbon solids content with regard to dry substance is at least 12%, by means of steam activation under an inert gas in an indirectly heated rotary tunnel kiln, **characterised in that** the spherically pre-formed materials are carefully pre-dried in a rotary tunnel dryer with 4-fold product turnover per kiln rotation and with a space/time ratio of from 1 to 2.5 m³/h using hot gas to a residual moisture content of 25%, the pre-dried semi-finished articles are carbonised in batches with 6-fold product turnover per kiln rotation and with a space/time ratio of from 5 to 10 m³/h and with a reduced pressure on the flue-gas side of 1.3 - 3,0 mm water column in an inert-gas flow in an indirectly heated rotary tunnel kiln to a fixed carbon content of from 80 to 97%, and the carbonised semi-finished articles are then activated in batches with 8-fold product turnover per kiln rotation and with a space/time ratio of from 1 to 5 m³/h with a reduced pressure on the flue-gas side of 0.05 - 1.0 mm water column with the addition of from 0.2 to 0.3 kg/h of steam in an inert-gas flow in an indirectly heated rotary tunnel kiln.

2. Process according to Claim 1, **characterised in that**, during the drying process, the product temperature is increased in stages by from 8 to 10° C/min to a final temperature of from 200 to 300° C, and the final temperature is kept constant for from 30 to 60 minutes.

3. Process according to Claim 1, **characterised in that** the carbonising is carried out in temperature intervals with a heating rate of from 6 to 9° C/min in the temperature range from 30 to 300°C, from 2 to 4° C/min in the temperature range from 300 to 500° C and from 1 to 3° C/min in the temperature range from 500 to 800° C final temperature.

4. Process according to Claim 1, **characterised in that** the quantity of steam is delivered to the activation kiln in a controlled way through nozzles, with 15% of the quantity.of steam being added in the 16 to 18% kiln length range, 20% of the quantity of steam in the 42 to 44% kiln length range, 30% of the quantity of steam in the 53 to 55% kiln length range, 20% of the quantity of steam in the 66 to 68% kiln length range and 15% in the 82 to 84% kiln length range, in each case calculated in terms of the heated kiln length from the product input.

5. Process according to Claims 1 and 4, **characterised in that** the material is activated with a product temperature profile over the entire heated kiln length of from 910° C to 920° C

## Revendications

1. Procédé suivi pour la production d'adsorbants à grand rendement formés à partir de matériaux préformés de manière sphérique, dont la teneur en carbone fixe relative à la matière sèche se monte à un minimum de 12% ; réalisé moyennant l'activation de la vapeur d'eau à l'aide de gaz inerte dans un fourneau tubulaire tournant à échauffement indirecte ; **caractérisé par** un processus de séchage soigneux préalable effectué sur les matériaux préformés de manière sphérique dans un sécheur rotatif, qui fait circuler le produit 4 fois par rotation du fourneau, à un coefficient de l'espace-temps de 1 à 2,5m³/h, et réalisé à l'aide de gaz chaude jusqu'à l'atteinte d'un taux d'humidité résiduelle de 25% ; les formes présechées sont soumise à la carbonisation dans le fourneau tubulaire tournant à échauffement indirecte travaillant en discontinuité, le produit circulant 6 fois par rotation du fourneau, à un coefficient de l'espace-temps de 5 à 10 m³/h et à un vide du côté des fumées de 1,5 à 3,0 mm de colonne d'eau dans le courant de gaz inerte, afin de réaliser une teneur en carbone fixe de 80 à 97% ; ensuite, en ajoutant entre 0,20 et 0,3 kg/h de vapeur d'eau les formes carbonatées sont activées en discontinuité au courant de gaz inerte dans le fourneau tubulaire tournant à échauffement indirecte, le produit circulant 8 fois par rotation du fourneau, à un coefficient de l'espace-temps de 1 à 5 m³/h et à un vide du côté des fumées de 0,05 à 1,0 mm de colonne d'eau.

2. Procédé selon spécification 1, **caractérisé par** l'augmentation graduelle de 8 à 10º C /minute de la température du produit en vue de la réalisation d'une température finale de 200 à 300º C, et par le maintien de la température finale à un niveau constant pendant 30 jusqu'à 60 minutes.

3. Procédé selon spécification 1, **caractérisé par** la carbonisation réalisée à intervalles thermiques, à une vitesse d'échauffement de 6 à 9º C/minute correspondant à un écart de températures entre 30 à 300ºC, respectivement de 2 à 4º C/minute correspondant à un écart de températures entre 300 et 500º C, respectivement de 1 à 3º C/minute correspondant à un écart de températures entre 500 et 800º C celle-ci représentant la température finale.

4. Caractéristique du procédé selon spécification 1 : la charge ouvrable de la vapeur d'eau est guidée à dosage au fourneau d'activation à l'aide de filières d'extrusion, l'alimentation se faisant en ajoutant 15% de la charge de la vapeur d'eau relative à une zone correspondant à un pourcentage de 16 à 18% de la longueur du fourneau, 20 % de la charge de la vapeur d'eau relative à une zone correspondant à un pourcentage de 42 à 44% de la longueur du fourneau, 30 % de la charge de la vapeur d'eau relative à une zone correspondant à 53 à 55 % de la longueur du fourneau, 20 % relative à une zone correspondant à un pourcentage de 66 et 68 % de la longueur du fourneau, 15 % pour une zone correspondant à un pourcentage de 82 à 84 % de la longueur du fourneau, à compter chaque fois par rapport à la longueur du fourneau chauffée à partir du chargement.

5. Procédé selon spécification 1 et 4, **caractérisé par** l'activation du produit en réalisant un profil de température du produit sur l'étendue totale de la longueur du fourneau chauffée à un écart de températures de 910º C à 920º C.
